Europäisches Patentamt

European Patent Office

Office européen des brevets

(11) Veröffentlichungsnummer: **0 161 688**
**B1**

(12) **EUROPÄISCHE PATENTSCHRIFT**

(45) Veröffentlichungstag der Patentschrift: **06.06.90**

(51) Int. Cl.⁵: **A 01 M 7/00**

(21) Anmeldenummer: **85106046.7**

(22) Anmeldetag: **16.05.85**

(54) Behälteranordnung für landwirtschaftliche Spritzgeräte.

(30) Priorität: **17.05.84 DE 3418339**

(43) Veröffentlichungstag der Anmeldung:
**21.11.85 Patentblatt 85/47**

(45) Bekanntmachung des Hinweises auf die
Patenterteilung:
**06.06.90 Patentblatt 90/23**

(84) Benannte Vertragsstaaten:
**FR**

(56) Entgegenhaltungen:
**DE-A-1 607 385**
**DE-A-3 119 700**
**DE-U-8 012 413**
**NL-A-6 713 432**

(73) Patentinhaber: **Gebr. Holder GmbH & Co.**
**Stuttgarter Strasse 40-46**
**D-7430 Metzingen (DE)**

(72) Erfinder: **Seybold, Fritz**
**Brühlstrasse 41**
**D-7430 Metzingen (DE)**
Erfinder: **Grosse-Brockhoff, Franz-J.**
**Haydnstrasse 11**
**D-7430 Metzingen (DE)**

(74) Vertreter: **Hoeger, Stellrecht & Partner**
**Uhlandstrasse 14 c**
**D-7000 Stuttgart 1 (DE)**

Courier Press, Leamington Spa, England.

## Beschreibung

Die Erfindung betrifft einer Behälteranordnung für zur Montage an einem Traktor oder dergleichen bestimmte Spritzgeräte mit einem Dreipunkt-Metallrahmen, welcher als Basisteil zur Abstützung des Bodens eines in seinem mittleren Teil einen zwischen zwei im Betrieb die Vorderwand und die Rückwand bildenden Tankwänden durchgehenden kanalartigen Durchbruch aufweisenden Flüssigkeitstanks dient, welcher ferner mindestens zwei auf einander gegenüberliegenden Seiten des Tanks angeordnete Seitenteile aufweist.

Derartige Behälteranordnungen sind bekannt und besitzen Rahmen mit bügelförmigen Streben, die oben über den Tank hinweg oder außen um den Tank herumlaufen, wobei der Tank selbst einen Durchbruch in Form eines tiefen, nach oben offenen Einschnitts aufweisen kann, welcher für den Fahrer des Zugfahrzeugs die Sicht nach hinten verbessert. Es wurden aber auch bereits quaderförmige Behälter mit einem zentralen, allseits geschlossenen Durchbruch entwickelt, bei denen der kanalartige Durchbruch als Luftansaugkanal für ein Sprühgebläse dient (DE—OS—31 19 700).

Nachteilig an den bekannten Rahmenkonstruktionen ist es, daß diese konstruktiv relativ aufwendig sind und/oder durch die auf sie im Betrieb einwirkenden Kräfte verformt werden, insbesondere durch die vom Oberlenker ausgeübten Kräfte an der Vorderseite der Tankanordnung und durch die Kräfte, die bei der Montage eine Feldspritzgestänges an der Rückseite der Tankanordnung auf den Rahmen ausgeübt werden.

Ausgehend vom Stande der Technik liegt der Erfindung die Aufgabe zugrunde, eine Behälteranordnung der eingangs angegebenen Art dahingehend zu verbessern, daß der Rahmen selbst einfach aufgebaut werden kann und die auf ihn übertragenen Kräfte im Betrieb problemlos aufnehmen kann.

Diese Aufgabe wird bei der eingangs angegebenen Behälteranordnung gemäß der Erfindung dadurch gelöst, daß die Behäteranordnung mit mindestens einer die Seitenteile im Abstand vom Basisteil miteinander verbindenden Querstrebe versehen ist, daß die Seitenteile als zum Basisteil umgekehrt angeordnete offene U-Bügel ausgebildet im Abstand vom Basisteil miteinander durch eine Querstrebe verbunden sind, die als eine den Durchbruch des Tanks durchgreifende und die oben angeordneten Mittelstege der Bügel miteinander verbindende Querstrebe ausgebildet ist.

Es ist ein wichtiger Vorteil der Behälteranordnung gemäß der Erfindung, daß der Rahmen wegen der durch den Tankdurchbruch hindurchgehenden Strebe in sich selbst sehr stabil wird und daß das von einem an der Rückseite der Tankanordnung montierten Spritzgerät ausgeübte Kippmoment über die Querstrebe direkt von dem Oberlenker der Dreipunkt-Aufhängung am Zugfahrzeug aufgefangen werden kann, welcher somit die am Rahmen wirksamen Zugkräfte aufnimmt, welche bei bekannten Rahmenkonstruktionen die Tendenz haben, an der Vorderseite und an der Rückseite befindliche bügelförmige Rahmenteile nach oben aufzuspreizen.

Dabei hat es sich in Ausgestaltung der Erfindung als vorteilhaft erwiesen, wenn die Querstrebe als Führungsschiene für eine Druckeinstellarmatur ausgebildet ist, da sich dem Fahrer des Zugfahrzeugs nunmehr die Möglichkeit bietet, die Druckeinstellarmatur für die Vornahme von Einstellarbeiten längs der Führungsschiene zu sich heranzuziehen und die Druckeinstellarmatur später wider in eine Lage zurückzuschieben, in der sie nicht stört. Dabei ist es besonders vorteilhaft, wenn in der Vorderwand des Tanks eine Vertiefung vorgesehen ist, insbesondere eine nach oben offene, schachtartige Vertiefung, welche geeignet ist, die Druckeinstellarmatur aufzunehmen, so daß diese nicht oder nur wenig über die angrenzenden Flächen der Tankwand vorsteht und damit optimal geschützt ist.

Günstig ist es ferner, wenn derjenige Bügel des Rahmens, der sich an der im Betrieb die Rückwand des Tanks bildenden Tankwand befindet, speziell in dem Bereich, in dem das eine Ende der Querstrebe an diesem Bügel befestigt ist, als Träger für eine Schnellkupplungsplatte für mindestens einen Schlauchanschluß einer Spritzvorrichtung ausgebildet ist, insbesondere als Schnellkupplungplatte für sämtliche Schlauchanschlüsse eines Spritzgeräts und als Träger für die Montage des Feldspritzgeräts an der Behälteranordnung, da aufgrund dieser Ausgestaltung die erforderlichen Anschlüsse schnell und zuverlässig hergestellt werden können.

Vorteilhaft ist es ferner, wenn an einer der im Betrieb eine seitliche Tankwand bildenden Tankwände ein dritter Seitenteil vorgesehen ist, welcher vorzugsweise ebenfalls als zum Basisteil offener U-Bügel ausgebildet sein kann und der schwenkbaren Halterung einer Füllschleusenanordnung dient, die unterhalb des an dieser Stelle gegenüber seiner tiefsten Stelle am Basisteil erhöht angeordneten Behälterbodens ausgebildet ist, da bei dieser konstruktiven Ausgestaltung die Füllschleusenanordnung für einen Füllvorgang nach außen geschwenkt werden kann, so daß sie leicht zugänglich ist, während sie nach Gebrauch wieder zurückgeschwenkt werden kann und nunmehr, zuminsdest im wesentlichen, vollständig innerhalb der Konturen des Flüssigkeitstanks liegt. Dabei ist es besonders vorteilhaft, wenn das obere Ende des das dritte Seitenteil des Rahmens bildenden Bügels als Griffstange ausgebildet ist, wobei vorzugsweise im mittleren Teil des das dritte Seitenteil des Rahmens bildenden Bügels eine als Halterung für mindestens einen Zusatzbehälter und/oder als Trittstütze dienende Querstrebenanordnung vorgesehen ist. Bei dieser Ausgestaltung kann nämlich der Benutzer einerseits leicht die Oberseite des Tanks erreichen, um dort Reparaturen, Einstellarbeiten usw. auszuführen, während andererseits in die Halterung Zusatzbehälter eingehängt werden können, deren Inhalt dann direkt in die nach außen geschwenkte Füllschleusenanordnung fließen kann.

Günstig ist es ferner, wenn der Tank auf seiner Oberseite mit mindestens einer Vertiefung zur Bildung eines Griffwulstes und/oder einer Ablagemulde für einen Zusatzbehälter versehen ist, da sich der Benutzer bei dieser Ausgestaltung wieder leicht an dem Tank hochziehen kann, der bei Vorhandensein von Ablagemulden die Möglichkeit bietet, dort Behälter mit Spritzmittelkonzentrat und dergleichen bereitzuhalten.

Bei einer Behälteranordnung gemäß der Erfindung ist der kanalartige Durchbruch in Längsrichtung vorzugsweise, zumindest abschnittsweise, ringsum geschlossen bzw. mit mindestens einer Querstange versehen, die einem Auseinanderspreizen der oberen Tankteile entgegenwirkt. Insbesondere ist es für einen seitlichen Halt des Tanks vorteilhaft, wenn der Durchbruch als ringsum geschlossener, relativ flacher Durchbruch ausgebildet ist, in dem im Abstand voneinander zwei parallele Querstreben verlaufen. Durch diese Ausgestaltung wird nämlich die Steifigkeit der Rahmenkonstruktion noch weiter verbessert.

Der Durchbruch kann mit Vorteil aber auch mit einem rinnenförmigen Bereich versehen sein, welcher die Querstrebe formschlüssig umgibt.

Bei allen Behälteranordnungen gemäß der Erfindung verläuft der kanalartige Durchbruch vorzugsweise ungefähr längs der Längsmittelachse des Tanks. Außerdem sind in vorteilhafter Ausgestaltung de Erfindung längs des Durchbruchs zusätzlich zu der mindestens einen Querstrebe vorzugsweise mehrere, insbesonder schlauchförmige Verbindungsleitungen angeordnet, die zum Spritzgerät bzw. zu den Anschlüssen de Schnellkupplungsplatte führen.

Weitere Einzelheiten und Vorteile der Erfindung werden nachstehend anhand von Zeichnungen noch näher erläuterrt. Es zeigen:

Fig. 1 eine Vorderansicht einer bevorzugten Ausführungsform einer Behälteranordnung gemäß der Erfindung;

Fig. 2 eine Seitenansicht der Behälteranordnung gemäß Fig. 1, gesehen in Richtung des Pfeils A in dieser Figur;

Fig. 3 eine Rückansicht der Behälteranordnung gemäß Fig. 2, gesehen in Richtung des Pfeils B in dieser Figur;

Fig. 4 eine Draufsicht auf die Behälteranordnung gemäß Fig. 1, gesehen in Richtung des Pfeils C in dieser Figur;

Fig. 5 einen Teilquerschnitt durch die Behälteranordnung gemäß Fig. 1 längs der Linie 5—5 in dieser Figur und

Fig. 6 und Fig. 7 perspektivische Darstellungen zweier bevorzugter Ausführungsformen des Rahmens der Behälteranordnung gemäß Fig.

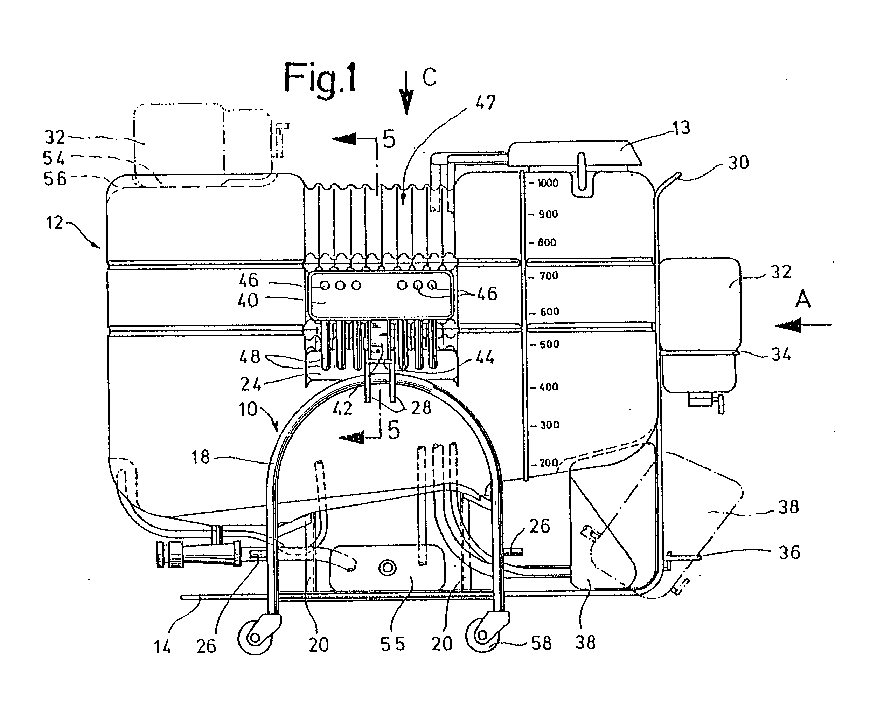

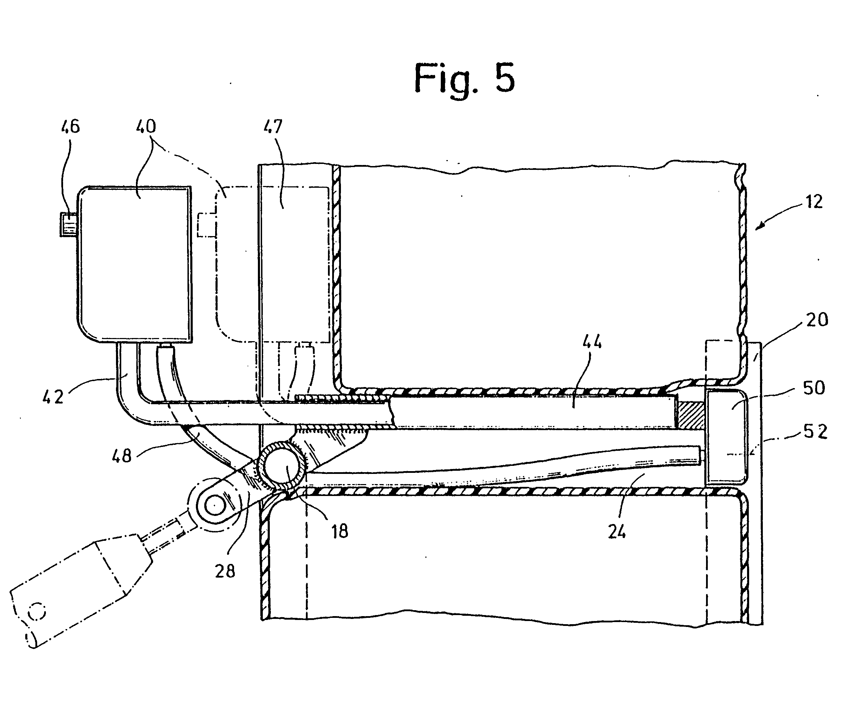

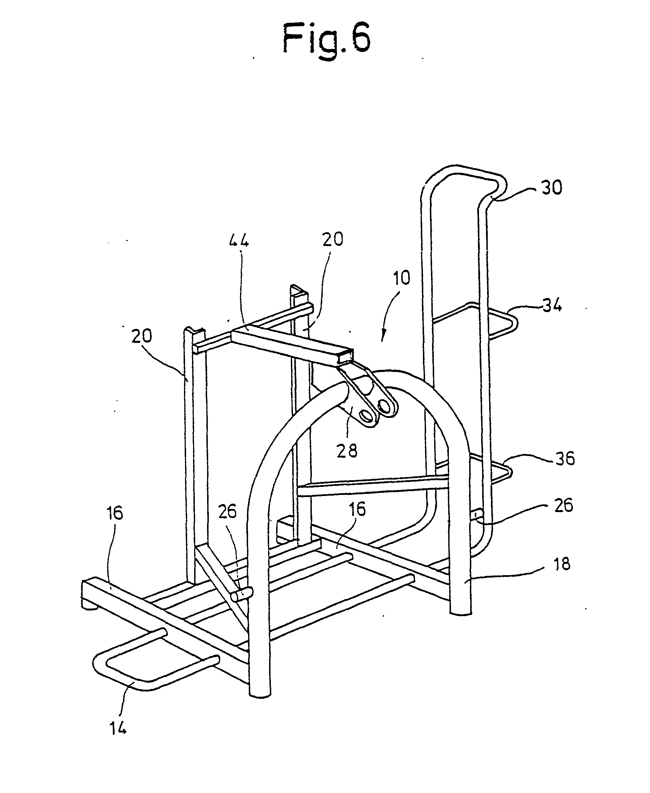

Im einzelnen zeigt Fig. 1 eine bevorzugte Ausführungsform einer Behälteranordnung gemäß der Erfindung mit einem Rahmen 10 und einem Flüssigkeitstand 12. Der Rahmen 10 besteht gemäß Fig. 6 der Zeichnung aus einem Basisteil mit einem im wesentlichen rechteckigen, geschlossenen Rohrrahmen 14 und zwei Querholmen 16. Weiterhin umfasst der Rahmen zwei Seitenteile in Form von zum Basisteil offenen U-Bügeln 18, 20, von denen der zur Vorderseite der Behälteranordnung gehörende Bügel 18 als gebogener Rohrbügel ausgebildet ist, während der zur Hinterseite der Behälteranordnung gehörende Bügel 20 aus zwei vertikalen Winkelschienen und einem Querstück zusammengesetzt ist. Zwischen den Bügeln 18, 20 verläuft eine Querstrebe 44, die bei der Behälteranordnung gemäß Fig. 1 einen durchgehenden, kanalartigen Durchbruch 24 (vgl. Fig. 5) des Behälters 12 durchgreift.

Wie Fig. 6 zeigt, sind am vorderen Bügel 18 des Rahmens 10 zwei Zapfen 26 und ein Befestigungsbügel 28 vorgesehen, die der Dreipunkt-Befestigung des Rahmens 10 und damit der Behälteranordnung an den zugeordneten Einrichtungen eines Traktors oder dergleichen dienen, wobei der Oberlenker an dem Befestigungsbügel 28 zu befestigen ist.

Bei dem in Fig. 1 bis 5 gezeigten Ausführungsbeispiel ist der Rahmen 10 ebenso wie der in Fig. 6 gezeigte Rahmen zusätzlich noch mit einem weiteren Bügel 30 versehen, welcher sich auf der einen — in Fig. 1 auf der rechten — Seite des Tanks befindet und ebenfalls U-förmig ausgebildet ist und am oberen Ende eine Griffstange aufweist.

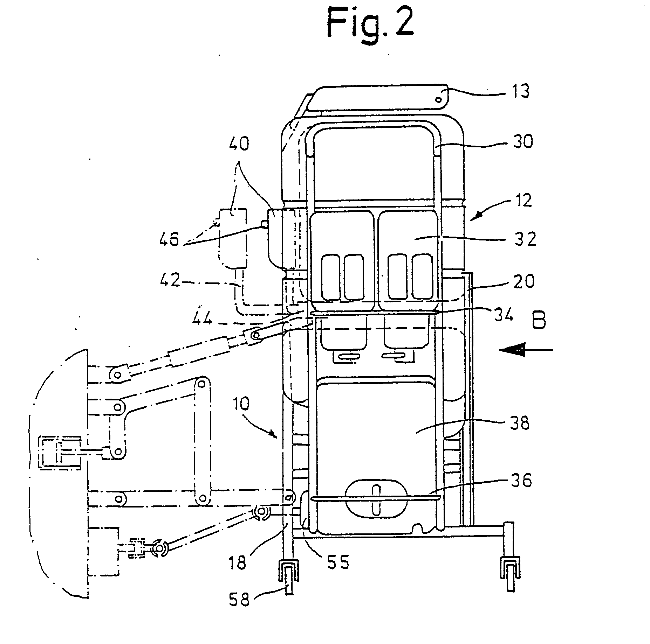

Wie aus Fig. 1 und 2 deutlich wird, besitzt der zusätzliche Bügel 30 bzw. der dritte Seitenteil des Rahmens 10 eine als Halterung für zwei Zusatzbehälter 32 ausgebildete Querstrebenanordnung 34, die vorzugsweise ausreichend stabil ausgebildet ist, um auch als Trittstütze dienen zu können so daß ein Benutzer den Handgriff des Bügels 30 erfassen und auf die Trittstütze steigen kann, um die Oberseite des Behälters 12 zu erreichen, wo sich ein Deckel 13 mit verschiedenen Leitungsanschlüssen befindett. An dem weiteren Bügel 30 ist ferner ein Quersteg 36 vorgesehen, der der schwenkbaren Halterung einer sogenannten Füllschleusenanordnung 38 dient.

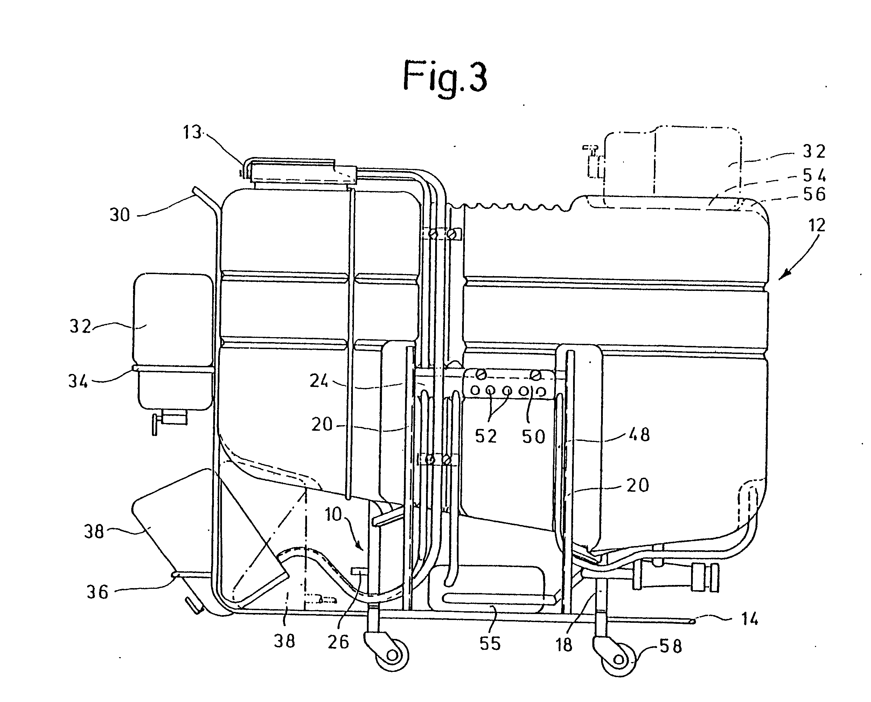

Die Füllschleusenanordnung 38 ist in Fig. 1 und 3 jeweils in ihren beiden Endstellungen mit ausgezogenen Linien bzw. mit strichpunktierten Linien eingezeichnet, und man erkennt, daß die Füllschleusenanordnung 38 dann, wenn sie nicht benötigt wird (ausgezogene Linien in Fig. 1), vollständig innerhalb der Konturen des Tanks 12 bz.w. innerhalb des Rahmens 10 liegt, während sie in ihrer anderen Endstellung (ausgezogene Linien in Fig. 3) mit einer Einfüllöffnung unmittelbar unter den Auslaßöffnungen der Zusatzbehälter 32 liegt, aus denen der Füllschleusenanordnung ein Spritzmittelkonzentrat oder dergleichen zuführbar ist. Zu der Füllschleusenanordnung 38 gehört vorzugsweise eine Wasserstrahlpumpe (nicht dargestellt), welche von einer Pumpe mit Wasser aus dem Tank 12 gespeist wird und dabei das Konzentrat aus der Füllschleuse mitreißt, so daß dieses intensiv mit dem Wasser gemischt wird, welches anschließend in den Tank 1 zurückgeleitet wird.

An der Vorderseite des Tanks 12 ist ferner eine Druckeinstellarmatur 40 angeordnet, welche gemäß Fig. 5 mittels eines Tragrohrs 42 an der Querstrebe 44 gehaltert ist, die beispielsweise als Vierkantrohr ausgebildet sein kann und als Führungsschiene für das Rohr 42 und damit für die Druckeinstellarmatur 40 dient. Zur Einstellung der verschiedenen Betriebsbedingungen an den in Fig. 1 sichtbaren Einstellknöpfen 46 der Druckeinstellarmatur kann de Benutzer die Armatur 40 insgesamt zu sich heranziehen, wobei die Armatur 40 in die in Fig. 5 mit ausgezogenen Linien gezeichnete Stellung gebracht werden kann, in der sie für einen auf dem Zugfahrzeug sitzenden Benutzer bequem zugänglich ist.

Für Lager- und Transportzwecke kann die Armatur 40 in die in Fig. 5 mit strichpunktierten Linien eingezeichnete Stellung zurückgeführt werden, in der sich die Armatur 40 einer nach oben offenen, schachtartigen Vertiefung 47 in der Vorderwand des Tanks 12 befindet, wo die Armatur relativ geschützt und so angeordnet ist, daß sie den Benutzer beim Arbeiten nicht stört.

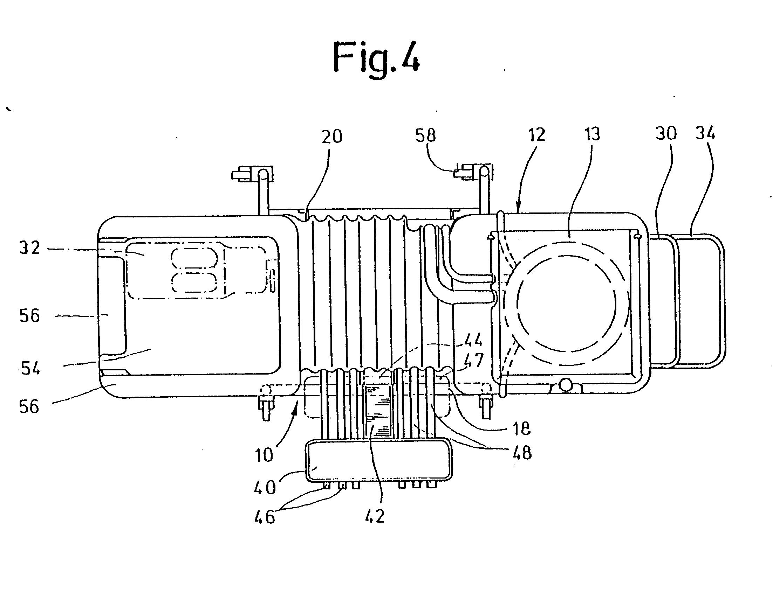

Wie aus Fig. 4 und 5 deutlich wird, sind mit der Druckeinstellarmatur 40 mehrere schlauchförmige Verbindungsleitungen 48 verbunden, von denen zumindest eine in dem kanalartigen Durchbruch 24 velegt ist, wobei ihr von der Armatur 40 abgewandtes Ende mit einer Schnellkupplungsplatte 50 verbunden ist, die mindestens einen Schlauchanschluß 52 für eine Spritzvorrichtung aufweist und vorzugsweise mit sämtlichen Schlauchanschlüsse für ein Spritzgerät versehen ist, wobei die Schnellkupplungsplatte 50 vorzugsweise gleichzeitig als Trägerplatte für die Montage des Feldspritzgeräts ausgebildet ist.

Aus Fig. 4 de Zeichnung wird ferner deutlich, daß an der Oberseite des Tanks eine Vertiefung 54 vorgesehen ist, die während des Transports als Ablagemulde für Zusatzbehälter 32 dienen kann. Außerdem können die Ränder der Vertiefung 54 so ausgestaltet werden, daß sich für den Benutzer bequem greifbare Griffwülste 56 ergeben.

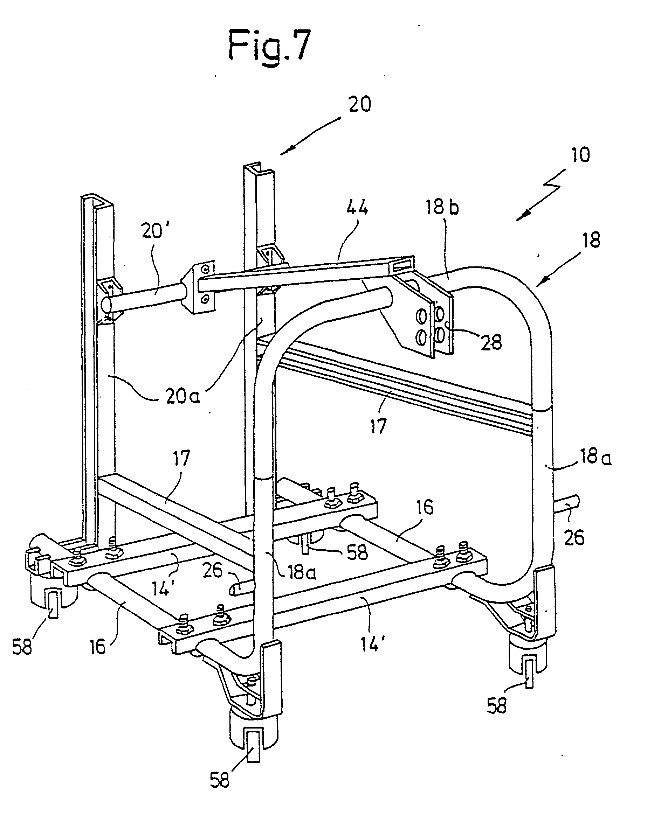

Fig. 7 zeigt eine abgewandelte Ausführungsform eines Rahmens 10, welche hinsichtlich seiner Funktion dem Rahmen 10 gemäß Fig. 6 entspricht, welcher jedoch so zusammengesetzt ist, daß er platzsparend gelagert werden kann. Im einzelnen sind bei dem Rahmen 10 gemäß Fig. 7 von dem geschlossenen Rohrrahmen 14 nur noch zwei Rahmenstege 14' vorhanden, die mit den Querholmen 1 verschraubt sind, deren im Betrieb dem Schlepper zugewandte Enden nach oben abgewinkelt sind und die unteren Teilstücke 18a des Bügels 18 bilden, welcher zusätzlich ein U-förmiges Teilstück 18b umfasst, dessen Schenkel mittels einer Steckverbindung mait den Teilen 18a verbunden sind. Das Teilstück 18b durchgreift eine Öffnung des Befestigungsbügels 28, mit dem das eine Ende der Querstrebe 44 fest verbunden, beispielsweise veschweißt ist, deren anderes Ende mit einem Element 20' des hinteren Rahmenteils verschraubt ist, der dem Bügel 20 bi dem Ausführungsbeispiel gemäß Fig. 6 entspricht und außer dem Element 20' zwei senkrechte Profilschienen 20a umfasst, mit denen das Element 20' verschraubt ist. Die unteren Enden der senkrechten Profilschienen 20a sind abgewinkelt und mit den Querholmen 16 fest verbunden. Weiterhin ist zwischen jedem der unteren Teile 18a und der jeweils zugeordneten Profilschiene 20a jeweils eine Stütze 17 fest angeordnet.

Man erkennt, daß der Rahmen 10 gemäß Fig. 7 für die Lagerung und den Transport in zwei relativ flache Seitenteile mit den Elementen 16, 17, 18a, 20a und gegebenenfalls den Rollen 58, in die Baugruppe 18b, 28, 44 und in die Elemente 14', 20' zerlegt werden kann, die platzsparend zusammengepackt werden können.

Weiterhin wird aus den Zeichnungsfiguren deutlich, daß der Rahmen 10 der erfindungsgemäßen Behälteranordnung mit Rollen 58 versehen ist, die ein Verfahren der Behälteranordnung nach deren Trennung von der Dreipunktaufhängung am Zugfahrzeug erleichtern, wie dies bei derartigen Behälteranordnungen an sich bereits bekannt ist.

Insgesamt wird aus der vorstehenden Beschreibung deutlich, daß durch die erfindungsgemäße Kombination eines Behälters mit einem durchgehenden kanalartigen Durchbruch und eines Rahmens mit einer diesen Durchbruch durchgreifenden Querstrebe eine Behälteranordnung geschaffen wird, deren Rahmen vergleichsweise einfach und damit auch billig herstellbar ist, jedoch andererseits eine hohe Stabilität aufweist und in der Querstrebe ein Element besitzt, über welches die am Rahmen angreifenden Kräfte optimal auf das Zugfahrzeug übertragen werden können. Weiterhin wird deutlich, daß bei einem Behälter mit einem durchgehenden Durchbruch, wie er erfindungsgemäß verwirklicht ist, zahlreiche Verbesserungen erreicht werden können, insbesondere hinsichtlich de Ausgestaltung der Oberseite des Behälters und der Verlegung der Verbindungsleitungen, wobei es besonders günstig ist, daß bei der Ausgestaltung der Tankoberseite nicht mehr auf die bisher dort vorhandenen Rahmenelemente Rücksicht genommen werden muß.

**Patentansprüche**

1. Behälteranordnung für zur Montage an einem Traktor oder dergleichen bestimmte Spritzgeräte mit einem Dreipunkt-Metallrahmen (18), welcher als Basisteil zur Abstützung des Bodens eines in seinem mittleren Teil einen zwischen zwei im Betrieb die Vorderwand und die Rückwand bildenden Tankwänden durchgehenden kanalartigen Durchbruch (24) aufweisenden Flüssigkeitstanks (12) dient, welcher ferner mindestens zwei auf einander gegenüberliegenden Seiten des Tanks angeordnete Seitenteile aufweist, dadurch gekennzeichnet, daß die Behälteranordnung mit mindestens einer die Seitenteile im Abstand vom Basisteil miteinander verbindenden Querstrebe (44) versehen ist, daß die Seitenteile als zum Basisteil umgekehrt angeordnete offene U-Bügel (18, 20) ausgebildet und im Abstand vom Basisteil miteinander durch die Querstrebe (44) verbunden sind, die als eine den Durchbruch (24) des Tanks (12) durchgreifende und die oben angeordneten Mittelstege der Bugel (18, 20) miteinander verbindende Querstrebe (44) ausgebildet ist.

2. Behälteranordnung nach Anspruch 1, dadurch gekennzeichnet, daß die Querstrebe (44) als Führungsschiene für eine Druckeinstellarmatur (40) ausgebildet ist.

3. Behälteranordnung nach Anspruch 2, dadurch gekennzeichnet, daß die im Betrieb die Vorderwand bildende Tankwand mit einer Vertiefung (47) zur Aufnahme der Druckeinstellarmatur (40) versehen ist.

4. Behälteranordnung nach Anspruch 3, dadurch gekennzeichnet, daß die Vertiefung (47) als nach oben offene schachtartige Vertiefung ausgebildet ist.

5. Behälteranordnung nach einem der Ansprüche 1 bis 4, dadurch gekennzeichnet, daß der hintere Bügel (20) an der im Betrieb die Rückwand des Tanks bildenden Tankwand als Träger für eine Schnellkupplungsplatte (50) für mindestens einen Schlauchanschluß (52) einer Spritzvorrichtung ausgebildet ist.

6. Behälteranordnung nach Anspruch 5, dadurch gekennzeichnet, daß die Schnellkupplungsplatte (50) als Schnellkupplungsplatte für sämtliche Schlauchanschlüsse eines Spritzgeräts und daß der hintere Bügel (20) als Träger für die Montage des Feldspritzgeräts an der Behälteranordnung ausgebildet ist.

7. Behälteranordnung nach einem der Ansprüche 1 bis 6, dadurch gekennzeichnet, daß an einer der im Betrieb eine seitliche Tankwand bildenden Tankwände ein dritter Seitenteil (30) des Rahmens (10) vorgesehen ist, welcher als zum Basisteil (14, 16) offener U-Bügel zur schwenkbaren Halterung einer Füllschleusenanordnung (38) unterhalb des an dieser Stelle gegenüber seiner tiefsten Stelle am Basisteil (14, 16) erhöht angeordneten Behälterbodens ausgebildet ist.

8. Behälteranordnung nach Anspruch 7, dadurch gekennzeichnet, daß das obere Ende des das dritte Seitenteil (30) des Rahmens (10) bildenden Bügels als Griffstange ausgebildete ist.

9. Behälteranordnung nach Anspruch 7 oder 8, dadurch gekennzeichnet, daß im mittleren Teil des das dritte Seitenteil (30) des Rahmens (10) bildenden Bügels eine als Halterung für mindestens einen Zusatzbehälter (32) und/oder als Trittstütze dienende Querstrebenanordnung (34) vorgesehen ist.

10. Behälteranordnung nach einem der Ansprüche 1 bis 9, dadurch gekennzeichnet, daß der Tank (12) auf seiner Oberseite mit mindestens einer Vertiefung (54) zur Bildung eines Griffwulstes (56) und/oder einer Ablagemulde für einen Zusatzbehälter (36) vorgesehene ist.

11. Behälteranordnung nach einem de Ansprüche 1 bis 10, dadurch gekennzeichnet, daß der kanalartige Durchbruch (24) des Tanks (12) in Längsrichtung zumindest Abschnittsweise ringsum geschlossen ist.

12. Behälteranordnung nach einem der Ansprüche 1 bis 11, dadurch gekennzeichnet, daß der Durchbruch (24) des Tanks (12) ungefähr längs der Längsmittelachse des Tanks (12) ausgebildet ist.

13. Behälteranordnung nach einem der Ansprüche 1 bis 12, dadurch gekennzeichnet, daß der Durchbruch (24) des Tanks als flacher Durchbruch mit zwei im Abstand voneinander und parallel zueinander verlaufenden Querstreben ausgebildet ist.

14. Behälteranordnung nach einem der Ansprüche 1 bis 13, dadurch gekennzeichnet, daß längs der Durchbruchs (24) des Tanks (12) mindestens eine schlauchförmige Verbindungsleitung zum Spritzgerät und/oder zu der Druckeinstellarmatur (40) verlegt ist.

15. Behälteranordnung nach Anspruch 1, dadurch gekennzeichnet, daß der Durchbruch (24) des Tanks (12) mit einem rinnenförmigen Bereich versehen ist, welcher die Querstrebe (44) formschlüssig umgibt.

16. Behälteranordnung nach Anspruch 1, dadurch gekennzeichnet, daß der Rahmen (10) als in für die Lagerung und den Transport zerlegbarer Rahmen ausgebildet ist (Fig. 7).

**Revendications**

1. Agencement de récipient pour le montage, sur un tracteur ou analogue, d'appareils de pulvérisation déterminés, comportant: un cadre métallique du type "trois points" (10) qui sert de partie base pour supporter le fond d'un réservoir de liquide (12) présentant, dans sa partie médiane, entre celles de ses parois qui, en service, sont la paroi avant et la paroi arrière, un ajour traversant du genre canal (24), et qui présente en outre au moins deux parties latérales agencées en des côtés opposés du réservoir, caractérisé par le fait que l'agencement de récipient est muni d'au moins une traverse-entretoise (44) qui, à distance de la partie base, relie entre elles les parties latérales, par le fait que les parties latérales sont réalisées en tant qu'arceaux (18, 20) de forme U ouverts vers la partie base à distance de laquelle ils sont mutuellement assemblés par la traverse-entretoise (44), laquelle est réalisée en tant qu'entretoise (44) traversant l'ajour (24) du réservoir (12) et reliant l'une à l'autre les parties médianes, situées en position haute, des arceaux (18, 20).

2. Agencement de récipient selon revendication 1, caractérisé par le fait que la traverse-entretoise (44) est réalisée en tant que rail de guidage pour un appareillage de réglage de pression (40).

3. Agencement de récipient selon revendication 2, caractérisé par le fait que la paroi du réservoir qui, en service, est la paroi avant, est munie d'une dépression (47) pour recevoir l'appareillage de réglage de pression (40).

4. Agencement de récipient selon revendication 3, caractérisé par le fait que la dépression (47) est réalisée en tant que dépression du genre gaine ouverte vers le haut.

5. Agencement de récipient selon l'une des revendications 1 à 4, caractérisé par le fait que l'arceau arrière (20), celui contre celle des parois du réservoir qui, en service, est la paroi arrière, est réalisé en tant que support pour une plaque de raccordement rapide (50) pour au moins un raccord (52) d'un tuyau d'un dispositif de pulvérisation.

6. Agencement de récipient selon revendication 5, caractérisé par le fait que la plaque de raccordement rapide (50) est réalisée en tant que plaque à raccords rapides pour tous les raccords de tuyaux d'un appareil de pulvérisation et par le fait que l'arceau arrière (20) est réalisé en tant que support pour le montage de l'appareil de pulvérisation sur l'agencement de récipient.

7. Agencement de récipient selon l'une des revendications 1 à 6, caractérisé par le fait qu'il est prévu, contre l'une des parois du récipient qui, en service, constitue une paroi latérale du récipient, une troisième partie latérale (30) du cadre (10) qui est aménagée en tant qu'arceau en U ouvert vers la partie base, pour maintenir avec possibilité de pivotement un agencement de sas de remplissage (38) en dessous du fond du récipient qui, à cet endroit, est agencé plus haut que son point le plus bas sur la partie base (14, 16).

8. Agencement de récipient selon revendication 7, caractérisé par le fait que l'extrémité supérieure de l'arceau constituant la troisième partie latérale (30) du cadre (10) est réalisée en tant que barre-poignée.

9. Agencement de récipient selon revendication 7 ou 8, caractérisé par le fait qu'il est prévu, dans la partie médiane de l'arceau constituant la troisième partie latérale (30) du cadre (10), un agencement d'entretoise (34) servant de marchepied et/ou de monture pour au moins un récipient supplémentaire (32).

10. Agencement de récipient selon l'une des revendications 1 à 9, caractérisé par le fait que le réservoir (12) comporte, sur son côté supérieur, au moins une dépression (54) pour constituer un bourrelet offrant une prise (56) et/ou une cuvette pour le dépôt d'un récipient supplémentaire (36).

11. Agencement de récipient selon l'une des revendications 1 à 10, caractérisé par le fait que l'ajour du genre canal (24) du réservoir (12) est fermé périmétriquement au moins par portions en direction longitudinale.

12. Agencement de récipient selon l'une des revendications 1 à 11, caractérisé par le fait que l'ajour (24) du réservoir (12) est aménagé sensiblement le long de l'axe longitudinal médian du réservoir (12).

13. Agencement de récipient selon l'une des revendications 1 à 12, caractérisé par le fait que l'ajour (24) du réservoir est réalisé en tant qu'ajour plat avec deux traverses-entretoises mutuellement parallèles et écartées l'une de l'autre.

14. Agencement de récipient selon l'une des revendications 1 à 13, caractérisé par le fait qu'au moins une conduite de liaison en forme de tuyau allant à l'appareil de pulvérisation et/ou à l'appareillage de réglage de pression (40) est posée le long de l'ajour (24) du réservoir (12).

15. Agencement de récipient selon revendication 1, caractérisé par le fait que l'ajour (24) du réservoir (12) est muni d'une région en forme de rigole qui entoure la traverse-entretoise (44) en formant une liaison mécanique positive.

16. Agencement de récipient selon revendication 1, caractérisé par le fait que le cadre (10) est réalisé en tant que cadre démontable pour le rangement et le transport (figure 7).

**Claims**

1. Arrangement of a tank for sprayers intended for assembly on a tractor or the like comprising a three-point metal frame (10) serving as a base portion for supporting the bottom of a liquid tank (12) including in its central portion a channel-like passage (24) passing between two tank walls forming the front wall and the back wall during operation and also having at least two side portions arranged on opposite sides of the tank, characterized in that the tank arrangement is provided with at least one crossbar (44) connecting the side portions with one another at a distance from the base portion, that the side portions are designed as open U-shaped bows (18, 20) arranged inversely to the base portion and are connected with one another by the crossbar (44) at a distance from the base portion, said crossbar being designed as a crossbar (44) penetrating the passage (24) of the tank (12) and connecting the upper central crosspieces of the bows (18, 20) with one another.

2. Tank arrangement as defined in claim 2, characterized in that the crossbar (44) is designed as a guide rail for a pressure control device (40).

3. Tank arrangement as defined in claim 2, characterized in that the tank wall forming the front wall during operation is provided with a recess (47) for accommodating the pressure control device (40).

4. Tank arrangement as defined in claim 3, characterized in that the recess (47) is designed as an upwardly opening, shaft-like recess.

5. Tank arrangement as defined in any of claims 1 to 4, characterized in that the rear bow (20) at the tank wall forming the rear wall of the tank during operation is designed as a carrier for a quick-coupling plate (50) for at least one hose coupling (52) of a sprayer.

6. Tank arrangement as defined in claim 5, characterized in that the quick-coupling plate (50) is designed as a quick-coupling plate for all the hose couplings of a sprayer and that the rear bow (20) is designed as a carrier for mounting the field sprayer on the tank arrangement.

7. Tank arrangement as defined in any of claims 1 to 6, characterized in that a third side portion (30) of the frame (10) is provided at one of the tank walls forming a side tank wall during operation, said side portion being designed as a U-shaped bow open towards the base portion (14, 16) for pivotally mounting a filling sluice arrangement (38) beneath the tank bottom arranged at this point such that it is raised relative to its lowest point at the base portion (14, 16).

8. Tank arrangement as defined in claim 7, characterized in that the upper end of the bow forming the third side portion (30) of the frame (10) is designed as a handle bar.

9. Tank arrangement as defined in claim 7 or 8, characterized in that a crossbar arrangement (34) is provided in the central portion of the bow forming the third side portion (30) of the frame (10), said crossbar arrangement serving as a mounting for at least one additional tank (32) and/or as a step bracket.

10. Tank arrangement as defined in any of claims 1 to 9, characterized in that the tank (12) is provided on its upper side with at least one recess (54) for forming a gripping bead (56) and/or a trough for accommodating an additional tank (36).

11. Tank arrangement as defined in any of claims 1 to 10, characterized in that the channel-like passage (24) of the tank (12) is closed on all sides in the longitudinal direction at least in sections.

12. Tank arrangement as defined in any of claims 1 to 11, characterized in that the passage (24) of the tank (12) is formed approximately lengthwise of the longitudinal central axis of the tank (12).

13. Tank arrangement as defined in any of claims 1 to 12, characterized in that the passage (24) of the tank is designed as a flat passage having two crossbars extending parallel to and spaced from one another.

14. Tank arrangement as defined in any of claims 1 to 13, characterized in that at least one hose-like connecting conduit to the sprayer and/or to the pressure control device (40) is laid lengthwise of the passage (24) of the tank (12).

15. Tank arrangement as defined in claim 1, characterized in that the passage (24) of the tank (12) is provided with a trough-shaped region positively enclosing the crossbar (44).

16. Tank arrangement as defined in claim 1, characterized in that the frame (10) is designed as a frame capable of being dismantled for storage and transport (Fig. 7).

Fig.1

1

# Fig.2

Fig.3

# Fig.4

EP 0 161 688 B1

# Fig. 5

EP 0 161 688 B1

# Fig.6

# Fig.7